# EUROPÄISCHE PATENTSCHRIFT

(11) **EP 2 706 036 B1**
(45) Veröffentlichungstag und Bekanntmachung des Hinweises auf die Patenterteilung: **29.10.2014**
(21) Anmeldenummer: 13183847.6
(22) Anmeldetag: 11.09.2013
(51) Int. Cl.: B66F 9/00, B66F 9/02, B65G 65/00, B65G 69/26

(54) **Vorrichtung zur Aufnahme und Übergabe von Ladungsträgern**
Apparatus for the taking and transferring of load carriers
Appareil pour la prise et le transfert de porteur de charges

(30) Priorität: 11.09.2012 DE 102012108472
(43) Veröffentlichungstag der Anmeldung: 12.03.2014
(73) Patentinhaber: M.W.B. GmbH, 84109 Wörth a.d. Isar (DE)
(72) Erfinder: Berghammer, Fritz, 84036 Landshut (DE)
(74) Vertreter: Gustorf, Gerhard

(56) Entgegenhaltungen:
- DE-U1- 8 909 126
- DE-U1-202011 051 064
- JP-A- H05 239 947

## Beschreibung

Die Erfindung betrifft eine Vorrichtung zur Aufnahme und Übergabe von Ladungsträgern nach dem Oberbegriff des Anspruchs 1.

Eine derartige Vorrichtung ist aus DE 30 17 147 C2 bekannt und dort als Lastaufnahmevorrichtung für ein Regalstapelfahrzeug ausgebildet. Dieses hat vor dem Fahrersitz ein Hubgerüst mit einem Mastschlitten, von dem ein Kragarm mit einem Drehschwenklager mit vertikaler Stange absteht, an der ein Kreuzschlitten hängt, der Bewegungen in x- und in y-Richtung ermöglicht. Am unteren Schlittenteil hängt eine hubgerüstartige Vertikalführung, an der ein Gabelzinkenpaar höhenverschieblich gelagert ist.

In DE 196 21 182 A1 ist eine Vorrichtung zum nicht zeitgleichen Bewegen einer Lastplattform in zwei voneinander unabhängigen Richtungen beschrieben und dargestellt, bei der an einem Vertikalführungsmast ein Hubwagen mit einem Kragträger gelagert ist, auf dem ein Kreuzschlitten für die Bewegung des Stückgutes in x- und in y-Richtung verfahrbar ist.

Aus G 89 09 126 U1 ist eine Vorrichtung zur Handhabung und Speicherung von Paletten bekannt, die über verschiedene Bewegungsmodule in unterschiedlichen Höhen und über eine Greifeinrichtung um eine vertikale Achse um beliebige Winkel verdreht werden können.

Die DE 20 2011 051 064 U1 der Patentinhaberin betrifft schließlich eine Vorrichtung zur Aufnahme und Übergabe von Lasten zwischen zwei unterschiedlichen Höhen, bei der an einer drehbaren Säule zwei durch ein Zugorgan miteinander verbundene Schlitten entgegengesetzt zueinander verfahrbar gelagert sind, von denen jeder ein Traggestell zur Aufnahme eines Trolleys hat.

Der Erfindung liegt die Aufgabe zugrunde, eine Vorrichtung zur Aufnahme und Übergabe von Ladungsträgern wie Paletten oder Gitterboxen zur Verfügung zu stellen, die mit konstruktiv einfachen Mitteln eine rasche Beladung und Entladung von Trolleys ermöglicht und als Bindeglied zur Überführung der Ladungsträger in Zwischen- oder Speicherstationen und zur Übernahme der Ladungsträger aus Transportfahrzeugen oder Speicherstationen eingesetzt werden kann.

Die Lösung dieser Aufgabe ergibt sich aus den Merkmalen des Anspruchs 1, wonach die Hubeinheit stationär auf einem Drehteller angeordnet ist, der in Winkelschritten von vorzugsweise jeweils 90° aus einer Trolley-Parkstation in Verteilerpositionen drehbar ist, in denen Horizontalförderer für die Übergabe oder Übernahme der Ladungsträger sorgen.

In der Trolley-Parkstation ist ein Positionierrahmen angebracht, der aus einer L-förmigen Winkelschiene besteht. Diese hat zwei um 90° zueinander ausgerichtete Sensoren und in gleicher Weise ausgerichtete Elektromagnete. Die Sensoren dienen dazu, die korrekte Parkposition des Trolleys zu erfassen, bevor der Drehtisch nach dem Anheben der Gabelzinken für einen Drehschritt freigegeben wird. Die Elektromagnete haben die Aufgabe, den jeweiligen Trolley in seine Parkposition zu ziehen und darin zu halten.

Die Vorrichtung nach der Erfindung eignet sich in besonderer Weise als Be- und Entladestation für werksinterne Routenzüge, um die darin transportierten Trolleys rasch zu entladen und die Ladungsträger (Paletten oder Gitterboxen) weiterzuleiten bzw. aus Puffer- oder Lagerstationen oder aus Anlieferungsfahrzeugen zu übernehmen.

Die Hubeinheit kann aus einem Hubschlitten bestehen, der auf einer auf dem Drehteller angebrachten Säule vorzugsweise hydraulisch verfahrbar ist und von dem die Gabelzinken abstehen. Alternativ besteht die Hubeinrichtung aus einem Scherentisch, der auf dem Drehteller angebracht ist und die Gabelzinken trägt.

Die Erfindung ist nachstehend an Ausführungsbeispielen erläutert, die in der Zeichnung dargestellt sind. Es zeigen:
- Figur 1: eine schematische Draufsicht auf eine Vorrichtung nach der Erfindung als Bindeglied zwischen einem Routenzug und Horizontalförderern, die in oder von Speicherstationen oder zu Lieferfahrzeugen führen,
- Figur 2: die perspektivische Ansicht der in Figur 1 verwendeten Dreh-Hubvorrichtung,
- Figur 3: die Vorderansicht der Vorrichtung nach Figur 2,
- Figur 4: die Seitenansicht sowie
- Figur 5: die Draufsicht der Vorrichtung gemäß Figur 2 und
- Figur 6: die perspektivische Ansicht einer Dreh-Hubvorrichtung einer abgeänderten Ausführungsform mit Scherentisch.

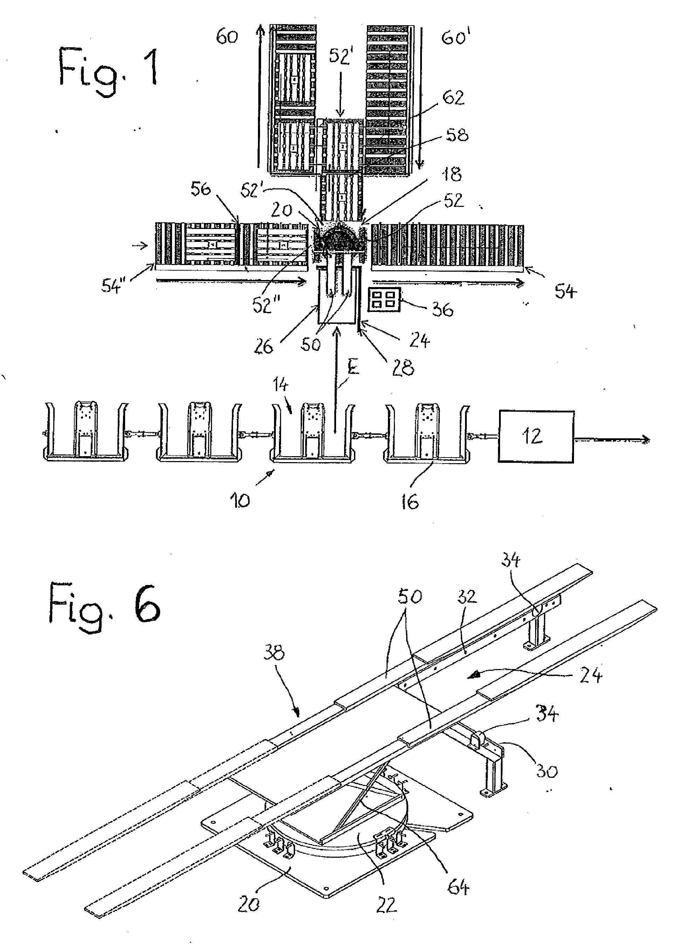

Figur 1 zeigt schematisch die Draufsicht eines Routenzuges 10, dessen Zugfahrzeug 12 insgesamt vier Trailerzuganhänger 14 in einem Fertigungsbetrieb zu den einzelnen Arbeitsstationen befördert. Jeder Anhänger 14 besteht hier aus einem in Draufsicht E-förmigen Rahmen 16 für die Aufnahme eines nicht weiter dargestellten Trolleys 26, wie er beispielsweise in dem eingangs erwähnten Gebrauchsmuster DE 20 2011 051 064 U1 gezeigt ist. Mittels des Trolleys werden ebenfalls nicht dargestellte Ladungsträger befördert, z. B. Paletten oder Gitterboxen.

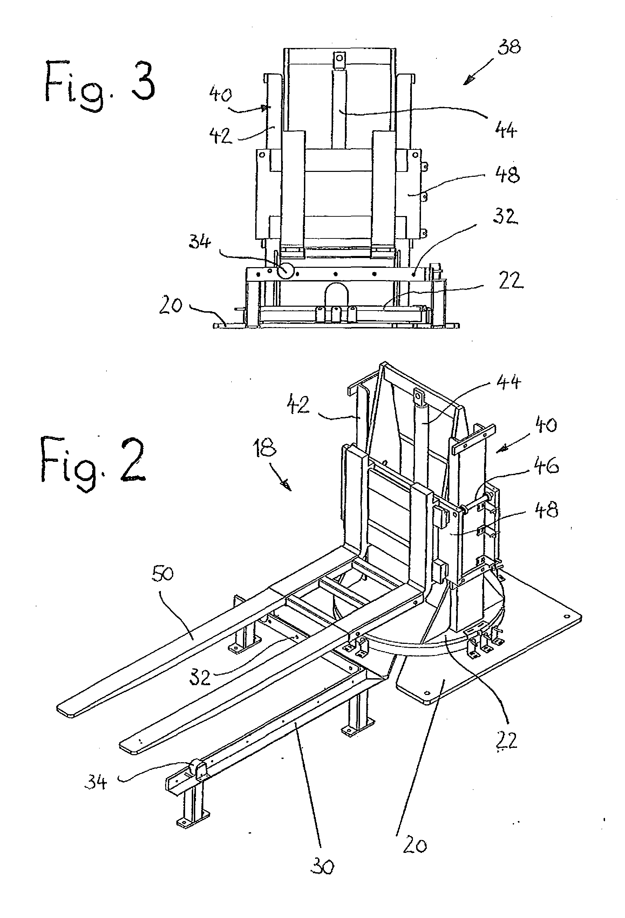

Die in Figur 1 gezeigte und in den Figuren 3 bis 5 näher dargestellte Vorrichtung 18 gemäß der Erfindung ist stationär auf einer Grundplatte 20 angebracht, auf der ein Drehtisch 22 in Winkelschritten von hier 90° drehbar gelagert ist. Dem Routenzug 10 gegenüber befindet sich eine Parkposition 24, in die der in Figur 1 angedeutete Trolley 26 aus dem Anhänger 14 in Richtung des eingezeichneten Pfeiles E von Hand eingeschoben wird. In der Parkposition 24 ist ein Positionierrahmen 28 in Form einer L-förmigen Winkelschiene 30 fest angebracht, die mit Sensoren 32 bestückt ist, welche rechtwinklig zueinander ausgerichtet sind und die korrekte Parkposition 24 des eingeschobenen Trolleys 26 erfassen.

Zusätzlich hat der Positionierrahmen 28 um 90° zueinander ausgerichtete Elektromagnete 34, die dazu dienen, den Trolley 26 in seiner korrekten Parkposition 24 zu halten.

In Figur 1 ist angedeutet, dass neben dem Positionierrahmen 28 ein Bedienpult 36 angeordnet ist, das zur Zyklensteuerung der Vorrichtung 18 dient.

Wie die Figuren 2 bis 5 weiter zeigen, ist auf dem Drehtisch 22 eine Hubeinheit 38 angebracht, die hier aus einer Säule 40 mit zwei parallelen Führungsschienen 42 besteht, an der mittels eines Hydraulikzylinders 44 und über Führungsrollen 46 ein Hubschlitten 48 vertikal verstellbar ist. Von diesem stehen waagrecht zwei Gabelzinken 50 ab. Die Hubhöhe des Hubschlittens 48 ist so bemessen, dass sie ausreicht, um mittels der Gabelzinken 50 einen Ladungsträger von dem Trolley 26 abzuheben und um hier 90° in die anschließende Verteilerposition 52, 52' oder 52" zu schwenken.

In Figur 1 ist zu erkennen, dass in den drei Verteilerpositionen 52, 52', 52" jeweils ein Horizontalförderer 54, 54', 54" in Form einer elektrisch angetriebenen Rollenbahn vorgesehen ist. Der in Figur 1 rechte Horizontalförderer 54 dient dazu, leere Ladungsträger (Paletten oder Gitterboxen) in Pfeilrichtung von der Vorrichtung 18 fortzubewegen, während der linke Horizontalförderer 54" die Aufgabe hat, volle Ladungsträger von einem Fahrzeug (LKW) zu übernehmen und der zentral angeordneten Vorrichtung 18 zuzuführen. Dieser Horizontalförderer 54" hat eine heb- und senkbare Halteschiene 56 zur Vereinzelung der Ladungsträger.

Die in der Mitte und gegenüber der Parkposition 24 vorgesehene Verteilerposition 52' geht nach einer Weiche 58 über in eine in Figur 1 linke Förderbahn 60, über welche die Ladungsträger in ein Lager gelangen, und in eine rechte Förderbahn 60', von der die Ladungsträger aus dem Lager der Vorrichtung 18 zugeführt werden. Im Bereich der Weiche 58 sind die beiden Förderbahnen 60, 60' durch einen Querkettenförderer 62 miteinander verbunden.

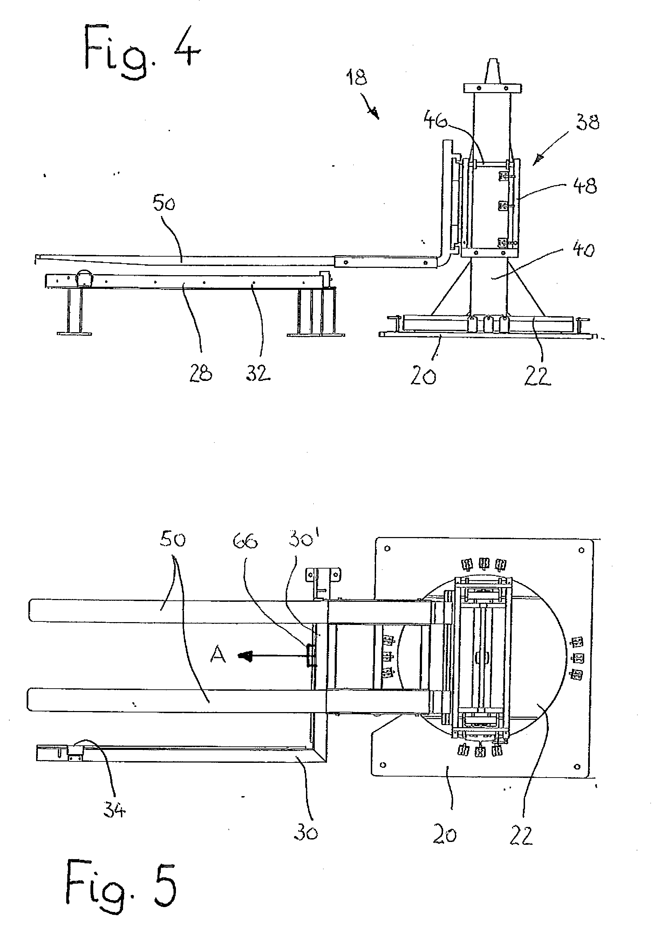

In Figur 5 ist angedeutet, dass an dem kurzen Schenkel 30' der L-förmigen Winkelschiene 30 ein Auswerfer 66 angebracht ist, der dazu dient, das Ausschieben eines Trolleys 26 aus der Parkposition 24 in Richtung des Pfeiles A zu erleichtern. Dies ist besonders vorteilhaft, wenn der Trolley 26 beladen ist und ein hohes Gewicht aufweist. Der mechanische, elektrische, hydraulische oder magnetische Auswerfer 66 kann beispielsweise vom Bedienpult 36 aus betätigt werden, wenn zuvor die Magnete 34 ausgeschaltet wurden.

Die Variante der Figur 6 zeigt, dass die Hubeinheit 38 aus einem Scherenhubtisch 64 bestehen kann, der auf dem Drehtisch 22 befestigt ist und auf dem die Gabelzinken 50 angebracht sind. Diese können teleskopisch ausfahrbar sein.

## Patentansprüche

1. Vorrichtung zur Aufnahme und Übergabe von Ladungsträgern mit einer um eine Hochachse drehbaren Hubeinheit (38), von der Gabelzinken (50) horizontal abstehen, wobei die stationär angeordnete Hubeinheit (38) auf einem Drehtisch (22) in Winkelschritten von vorzugsweise 90° aus einer Trolley-Parkposition (24) in Verteilerpositionen (52) drehbar ist, **dadurch gekennzeichnet, dass** die Vorrichtung den Verteilerpositionen (52) zugeordnete Horizontalföderer (54) für die Ladungsträger und einen in der Trolley-Parkposition (24) angebrachten, aus einer Winkelschiene (30) bestehender Positionierrahmen (28) aufweist, der wenigstens zwei um 90° zueinander ausgerichtete Sensoren (32) zum Erfassen der korrekten Parkposition (24) des Trolleys (26) und zur Freigabe der Drehschritte des Drehtisches (22) sowie zwei um 90° zueinander ausgerichtete Elektromagnete (34) zum Halten des Trolleys (26) in seiner korrekten Parkposition (24) hat.

2. Vorrichtung nach Anspruch 1, **dadurch gekennzeichnet, dass** in der Trolley-Parkposition (24) ein Auswerfer (66) angeordnet ist.

3. Vorrichtung nach Anspruch 1 oder 2, **dadurch gekennzeichnet, dass** die Hubeinheit (38) aus einer auf dem Drehtisch (22) angebrachten Säule (40) besteht, auf der ein Hubschlitten (48) vertikal verstellbar ist, von dem die Gabelzinken (50) abstehen.

4. Vorrichtung nach Anspruch 3, **dadurch gekennzeichnet, dass** der Hubschlitten (48) mittels eines Hydraulikzylinders (44) vertikal verfahrbar ist.

5. Vorrichtung nach Anspruch 1 oder 2, **dadurch gekennzeichnet, dass** die Hubeinheit (38) aus einem auf dem Drehtisch (22) angebrachten Scherenhubtisch (64) besteht, auf dem die Gabelzinken (50) angebracht sind.

6. Vorrichtung nach einem der Ansprüche 3 bis 5, **dadurch gekennzeichnet, dass** die Gabelzinken (50) teleskopisch ausfahrbar sind.

## Claims

1. Device for taking and transferring load carriers, comprising a lifting unit (38) rotably mounted about a vertical axis and having horizontally protruding prongs (50), said stationary positioned lifting unit (38) being rotably mounted on a turntable (22) such that it may be rotated by angular intervals of preferably 90° from a trolley parking position (24) into distribution positions (52), **characterized in that** in each of said distribution positions (52) horizontally acting conveyors (54) for said load carriers are provided and that in said trolley parking position (24) an L-bar (30) positioning frame (28) is located provided with at least two orthogonally positioned sensors (32) adapted to detect the correct parking position (24) of the trolley (26) and to release the rotary steps of said turntable (22), and with two orthogonally positioned electromagnets (34) adapted to hold said trolley (20) in its correct parking position (24).

2. Device according to claim 1 wherein in the trolley parking position (24) an ejector (66) is provided.

3. Device according to claim 1 or 2, wherein said lifting unit (38) is made up of a column (40) mounted on the turntable (22), on said column (40) a vertically adjustable slide (48) being mounted having said protruding prongs (50).

4. Device according to claim 3, wherein said slide (48) is vertically moved by an hydraulic cylinder (44).

5. Device according to claim 1 or 2, wherein said lifting unit (38) is made up of a scissor type jack (64) mounted on the turntable (22) and supporting said prongs (50).

6. Device according to any of the preceding claims 3 to 5, wherein said prongs (50) are telecopically extendable.

## Revendications

1. Dispositif pour la prise et pour le transfert de porteurs de charges comprenant une unité de levage (38) tournant sur un axe vertical et présentant des fourchons (50) horizontaux, l'unité de levage (38) stationnaire étant montée sur une table tournante (22) de sorte à être orientée par des pas angulaires de préférence à 90° d'une position d'arrêt (24) des trolleys dans des positions de distribution (52), **caractérisé par le fait que** ledit dispositif comprend des convoyeurs horizontaux (54) associés aux positions de distribution (52) pour les porteurs de charges et un cadre de positionnement (28) formé d'un rail en équerre (30) logé dans la position d'arrêt (24) qui est muni d'au moins deux capteurs (32) orthogonalement placés pour détecter la position d'arrêt correcte (24) des trolleys (26) et pour le relâchement des pas angulaires de la table tournante (22) et de deux électroaimants (34) orthogonalement placés pour arrêter le trolley (26) dans sa position d'arrêt correcte (24).

2. Dispositif selon la revendication 1 **caractérisé par le fait que** dans la position d'arrêt (24) est prévu un éjecteur (66).

3. Dispositif selon la reventication 1 ou 2, **caractérisé par le fait que** l'unité de levage (38) est composée d'une colonne (40) montée sur la table tournante (22) sur laquelle est monté un chariot (48) verticalement déplaçable et sur lequel sont appliqués lesdits fourchons (50).

4. Dispositif selon la revendication 3 **caractérisé par le fait que** le chariot (48) est verticalement déplaçable au moyen d'un cylindre hydraulique (44).

5. Dispositif selon la revendication 1 ou 2, **caractérisé par le fait que** l'unité de levage (38) est composée d'un cric à parallélogramme (64) monté sur la table tournante (22) et muni desdits fourchons (50).

6. Dispositif selon une des revendications 3 à 5, **caractérisé par le fait que** les fourchons (50) sont aptes à être téléscopiquement allongés.
